# EUROPEAN PATENT APPLICATION

(11) **EP 1 153 559 A2**
(43) Date of publication of application: **14.11.2001**
(21) Application number: 01110702.6
(22) Date of filing: 02.05.2001
(51) Int. Cl.: A47F 9/04

(54) **Connector device**

(30) Priority: 08.05.2000 GB 0011001; 15.05.2000 GB 0011907
(71) Applicant: QM Group Limited, Milton Keynes MK19 7HJ (GB)
(72) Inventor: Green, Terence Ronald, Northamptonshire, NN12 8XS (GB); Pittmann, Derek, Buckinghamshire MK46 5JP (GB)
(74) Representative: Raynor, Simon Mark

(57) **Abstract**

A connector device 40 for use with a personnel barrier system includes a first connecting structure 50 suitable for engaging a T-shaped fixing point and a second connecting structure 52 suitable for engaging a V-shaped slot. The first connecting structure 50 includes a pair of opposed, inwardly-extending wall elements 54 defining between them a T-shaped slot 56. The second connecting structure 52 includes a pair of outwardly-extending wall elements 58 for engaging the V-shaped slot.

## Description

The present invention relates to a connector device and in particular, but not exclusively, to a tape end connector device forming part of a personnel barrier system that includes an extendable tape.

Personnel barrier systems are used in many situations to control the movement of people, for example to control queues in banks, shops, airports etcetera and to restrict movement and/or access, for example in art galleries and museums. Such barriers typically include a set of posts that are supported on heavy bases and are interconnected by extendable tapes, held in springloaded cassettes mounted in the tops of the posts. Alternatively, the cassettes may be permanently attached to fixed points, for example on a wall or a check-out counter in a shop.

There are a number of different manufacturers of such systems apart from ourselves, including Tensator Ltd in the UK, Lavi in the USA and Unifila in Mexico. These manufacturers all make systems that are incompatible with each other. What is more, some of these manufacturers make, or have made, different systems that are mutually incompatible (for example, Tensator's Mk II & III systems). There are therefore a proliferation of systems available, each of which can be used only with other components of the same system. As a result, users of the systems are tied to that system and cannot purchase spare part from another manufacturer, or change to another manufacturer without replacing the entire system.

A vital part of such a barrier system is the end connector that is used to connect the free end of the extendable tape to a fixing point on the top of another post or at a fixed location, such as a wall. These end connectors and the corresponding fixing points to which they can be attached vary significantly from one system to another, with the result that different systems are incompatible. Examples of the different prior art fixing points are shown in the accompanying drawings, which are described in more detail below.

It is an object of the present invention to provide an end connector that is compatible with the fixing points of two or more of the prior art barrier systems.

According to the present invention there is provided a connector device for use with a personnel barrier system, the connector device including a first connecting structure suitable for engaging a first fixing point including a fixing member having a substantially T-shaped cross-section, said first connecting structure including a pair of opposed, inwardly-extending wall elements that, in use, engage the T-shaped fixing member, said wall elements defining between them an elongate slot having a substantially T-shaped cross-section, and a second connecting structure suitable for engaging a second fixing point having slot with a substantially V-shaped cross-section, said second connecting structure including a pair of outwardly-extending wall elements that, in use, engage the V-shaped slot of said second fixing point.

The connector device can be connected to any of the prior art fixing points described above and is compatible with each of those barrier systems. It can therefore be used as a universal connector, enabling the owner of one of the earlier systems to buy spare parts for that system, or to use components of two or more systems, without difficulty.

Advantageously, said first connecting structure and said second connecting structure are substantially co-axial. For example, the first connecting structure including a T-shaped slot may be provided within the second connecting structure. This provides a very compact arrangement.

Advantageously, said connector device includes a pair of substantially parallel connector elements each of which has a substantially T-shaped cross-section, the inner portions of said connector elements comprising said inwardly-extending wall elements that, in use, engage the T-shaped fixing member of the first fixing point, and the outer portions of said connector elements comprising said outwardly-extending wall elements that, in use, engage the V-shaped slot of said second fixing point.

Advantageously, the rear faces of the outwardly-extending wall elements subtend an angle of between 80° and 100°, preferably approximately 90°, to match the V-shaped slots of the prior art systems.

Advantageously, the front faces of the T-shaped connector elements are arcuate and concave, the centres of curvature of said arcuate faces being substantially coaxial. This provides a good fit with the cylindrical posts.

Advantageously, the front part of the T-shaped slot has a width of between 6.5mm and 8.5mm, preferably approximately 7.0mm, and the rear part of the slot has a width of between 10.5mm and 11.5mm, preferably of approximately 10.8mm.

Advantageously, the distance between the outer edges of the wall elements is between 16.5mm and 17.0mm, preferably approximately 16.6mm

Advantageously, the connector device includes at least one stop member within said elongate slot, for limiting axial movement of said T-shaped fixing member along said slot. This ensures that the connector device is positioned correctly when in use.

Advantageously, the connector device includes a cap member that closes one end of said elongate slot.

Advantageously, the connector device includes attachment means for attaching said connector device to the free end of a tape.

Advantageously, the connector device is moulded in a plastics material.

An embodiment of the invention will now be described by way of example with reference to the accompanying drawings, in which:
Fig. 1 is a cross-section of a first prior art fixing point;
Fig. 2 is a cross-section of a second prior art fixing point;
Fig. 3 is a cross-section of a third prior art fixing point;
Fig. 4 is a cross-section of a fourth prior art fixing point;
Fig. 5 is a perspective view from the front and one side of a connector device according to the present invention;
Fig. 6 is a perspective view from the rear and one side of the connector device:
Fig. 7 is a side view of a body element of the connector device;
Fig. 8 is a plan view of the body element;
Fig. 9 is an inverted plan view of the body element;
Fig. 10 is a front view of the body element;
Fig. 11 is a rear view of the body element;
Fig. 12 is a plan cross-sectional view of the body element at an enlarged scale, on line XII-XII of Fig. 7;
Fig. 13 is a side cross-sectional view of the body element;
Fig. 14 is a side view of a top cap of the connector device;
Fig. 15 is an inverted plan view of the top cap;
Fig. 16 is a plan view of a bottom cap of the connector device;
Fig. 17 is an side cross-sectional view of the bottom cap;
Fig. 18 is a plan view of a body element according to a second embodiment of the connector device;
Fig. 19 is a rear view of the body element;
Fig. 20 is a side view of the body element;
Fig. 21 is a front view of a bottom cap of the second connector device;
Fig. 22 is a bottom plan view of the bottom cap, and
Fig. 23 is a rear view of the bottom cap.

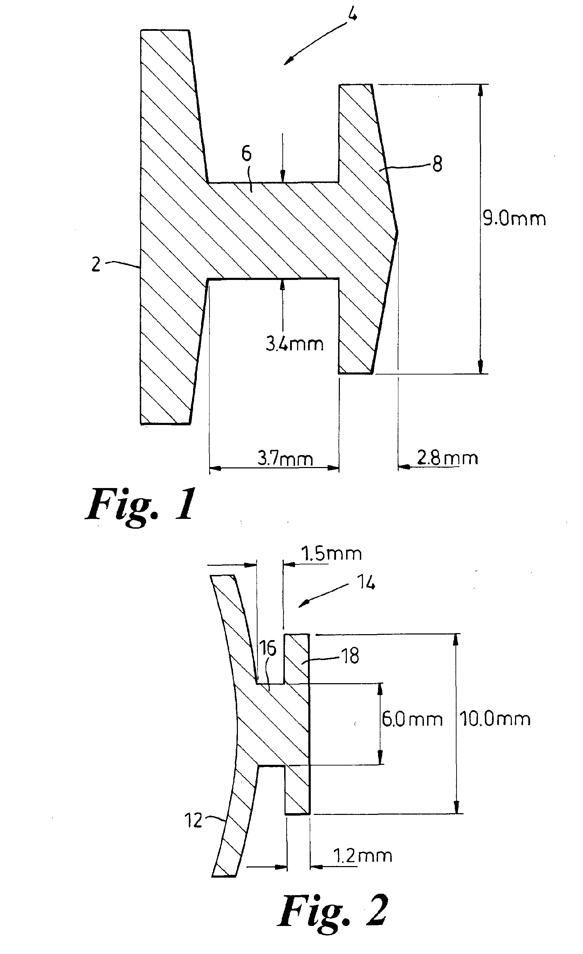

The fixing points of various prior art personnel barrier systems are shown in cross-section in Figs. 1-4. These illustrate respectively the Mark II and III systems of Tensator Limited, and the fixing points on the tape cassettes of Unifila and Lavi.

The Tensator Mk. II fixing point consists of a moulded plastics component having the cross-sectional shape shown in Fig. 1. This component would normally be mounted on the top of a removable post or at a fixed location, such as on a wall or a check-out counter. The component includes a base 2 and a fixing member 4 having a substantially T-shaped cross-section, said T-shaped fixing member including a body portion 6 having a width of 3.4mm and a height of 3.7mm, and an arrow-shaped head portion 8 having a width of 9.0mm and a maximum height of 2.8mm. The T-shaped fixing member 4 may be engaged in use by a connector device attached to the free end of a tape, the connector device having a T-shaped slot that corresponds to the shape of the T-shaped fixing member 4.

The Tensator Mk. III fixing point shown in Fig. 2 is more compact than the Mk. II fixing point and includes an arcuate base 12 and a T-shaped fixing member 14 having a body portion 16 with a width of 6.0mm and a height of 1.5mm, and an flat head portion 18 with a width of 10.0mm and a height of 1.2mm. The connector device for the Mk. III system again has a T-shaped slot that matches the T-shaped fixing member 14.

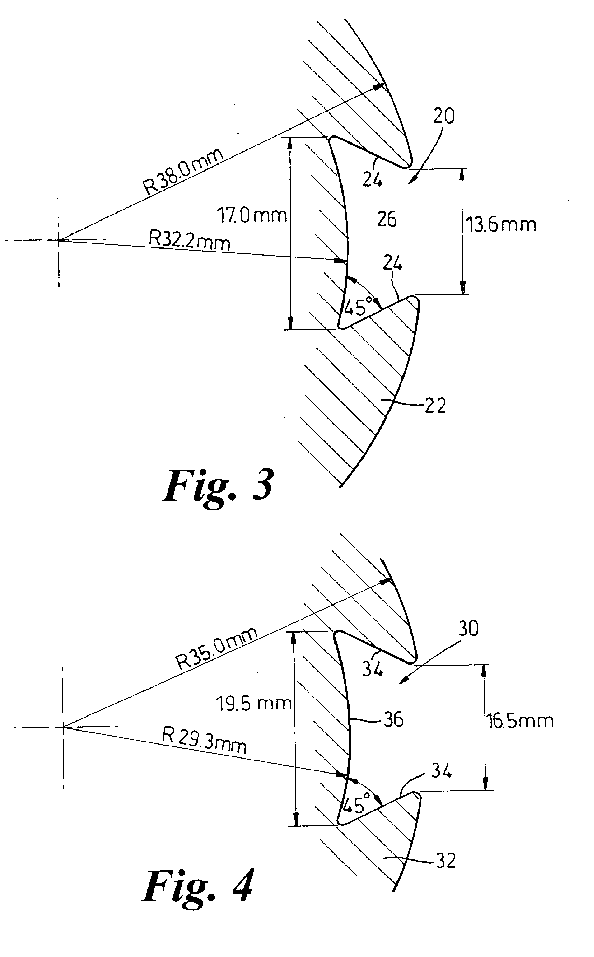

The fixing point of the Unifila barrier system is shown in Fig. 3 and includes a V-shaped slot 20 formed in the cylindrical wall 22 of the tape cassette. The wall 22 has an internal radius of 32.2mm and an external radius 38.0mm. The slot 20 has a width of approximately 17.0mm at its base and 13.6mm at the outer circumference of the wall 22, and the inclined sides 24 of the slot each subtend an angle of approximately 45° with the arcuate base 26 of the slot.

The fixing point of the Lavi system shown in Fig. 4 and is similar in shape to that of the Unifila system but it has different dimensions. The V-shaped slot 30 is formed in the cylindrical wall 32 of the tape cassette, which has an internal radius of 29.3mm and an external radius 35.0mm. The slot 30 has a width of approximately 19.5mm at its base and 16.5mm at the outer circumference of the wall 32, and the inclined sides 34 of the slot each subtend an angle of approximately 45 ° with the arcuate base 36 of the slot.

The fixing points on the posts of the Unifila and Lavi systems (which are not illustrated) are intended to be similar to those provided on the cassettes but in practice we have found that there are significant differences in their dimensions. For example, we have found that the slot in the Unifila post has a width of approximately 19.0mm at its base and 14.2mm at the outer circumference of the wall, and the inclined sides of the slot each subtend an angle of approximately 40° with the base of the slot. The slot in the Lavi post typically has a width of approximately 19.0mm at its base and 15.8mm at the outer circumference of the wall, and the inclined sides of the slot each subtend an angle of approximately 40° with the base of the slot. These variations in the dimensions of the Lavi and Unifila fixing points, and the different form of the fixing points of the two Tensator systems, make it difficult to design a connector device that will work satisfactorily with all the prior art fixing points.

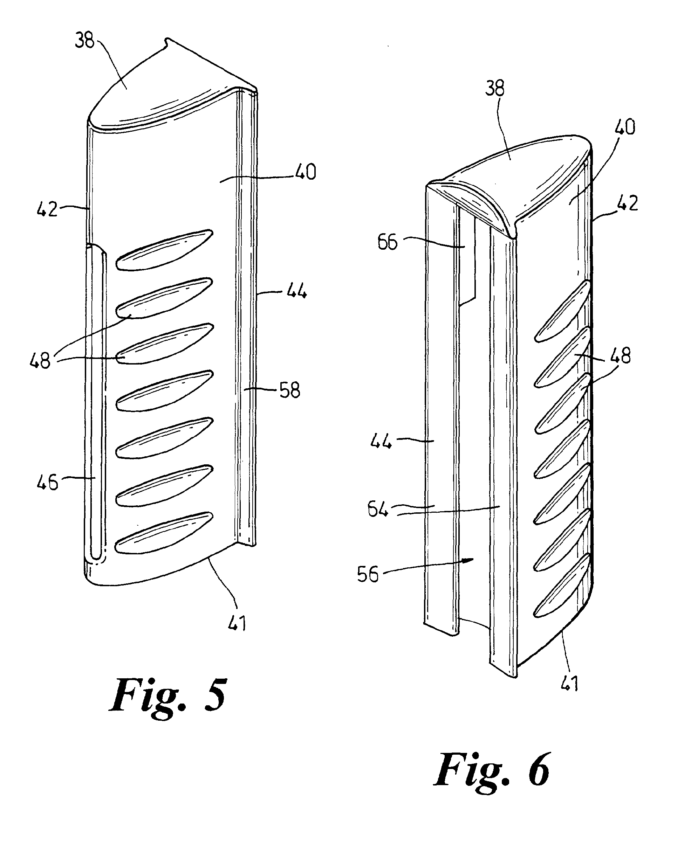

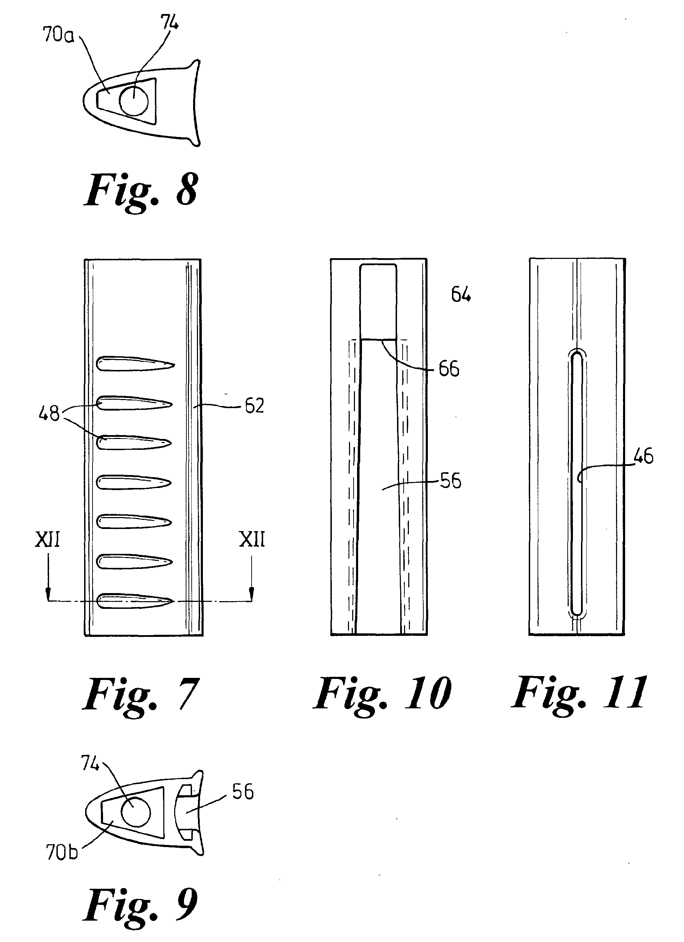

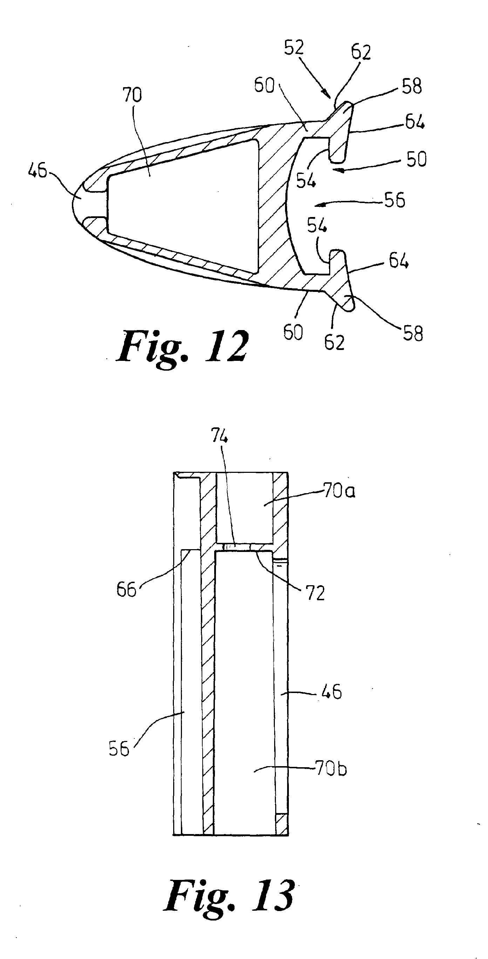

A connector device according to the present invention is shown in Figs. 5-17 of the accompanying drawings. The connector device is a moulded plastics component that is attached to the free end of an extendable tape (not shown).

The connector device has a top cap 38, an elongate body element 40 that is approximately 7cm long and a bottom cap 41. In cross-section, the body 40 is substantially semi-elliptical, having a narrow rear end 42 and a wide front end 44. The rear end 42 includes a slot 46 in which the free end of the tape is located. Elliptical depressions 48, which serve as finger grips, are provided in the flanks of the body.

The front end 44 of the body 40 includes a first connecting structure 50 that is suitable for engaging the T-shaped fixing members 4,14 used in the Tensator Mk. II & III systems, and a second connecting structure 52 that is suitable for engaging a V-shaped slots 20,30 used in the Lavi and Unifila systems.

The first connecting structure 50 includes a pair of opposed, inwardly-extending wall elements 54 that, in use, engage the T-shaped fixing members 4,14. The wall elements 54 define between them an elongate slot 56 having a substantially T-shaped cross-section, that extends along the length of the body 40. The narrow front part of the T-shaped slot 56 has a width of approximately 7.0mm while the wide rear part of the slot has a width of approximately 10.8mm, to fit the T-shaped fixing members 4,14 used in the Tensator Mk. II & III systems.

The second connecting structure 52 includes a pair of outwardly-extending wall elements 58 that, in use, engage the V-shaped slots 20,30 of the Lavi and Unifila systems. The distance between the outer edges of the wall elements 58 is approximately 16.6mm, to fit the V-shaped slots 20,30 of the Lavi and Unifila posts and cassettes.

The first and second connecting structures 50,52 are constructed in the form of a pair of substantially parallel connector elements 60 that extend from the front end 44 of the body 40. Each of the connector elements 60 has a substantially T-shaped cross-section, the inner portions of the connector elements 60 forming the inwardly-extending wall elements 54, and the outer portions of the connector elements forming the outwardly-extending wall elements 58.

The rear faces 62 of the outwardly-extending wall elements 58 subtend an angle of approximately 90°, to match the inclined sides 24,34 of the V-shaped slots 20,30. The front faces 64 of the T-shaped connector elements 60 are arcuate and concave, the centres of curvature of said arcuate faces being substantially coaxial and parallel to the longitudinal axis of the body member 40. The radius of curvature is approximately 32mm, which is an approximate average of the radii of the Tensator, Lavi and Unifila posts and cassettes.

At the upper end of the slot 56, a pair of stop members 66 are provided, for limiting axial movement of a T-shaped fixing member along said slot. The stop members 66 comprise a pair of short walls that extend rearwards from the inner edges of the inwardly-extending wall elements 54.

The rear part of the body element 40 includes a trapezoidal cavity 70 that extends through the body element parallel to the longitudinal axis thereof and that communicates with the slot 46. A dividing wall 72 that includes a circular orifice 74 extends across this cavity, towards its upper end, dividing the cavity into an upper part 70a and a lower part 70b. The lower part 70b of the cavity accommodates the end of the barrier tape (not shown), which in use extends into the cavity through the slot 46.

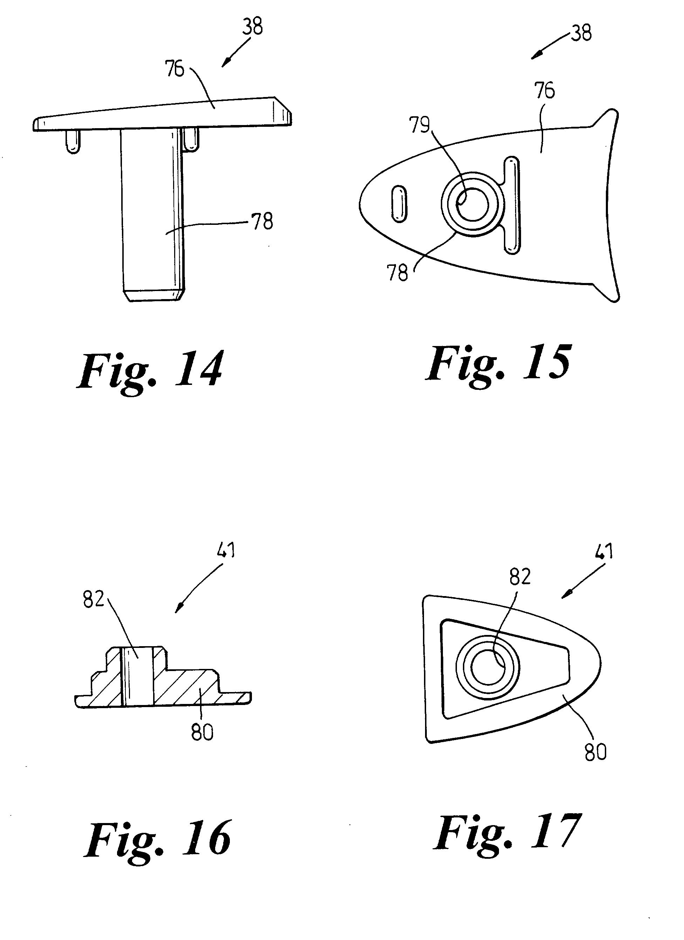

The top cap 38, which is shown in Figs. 14 and 15, is a push fit in the upper part 70a of the cavity and includes a profiled plate 76 that closes the upper ends of the cavity 70 and the elongate slot 56, and a depending shaft 78. The end of the shaft 78 includes a bore 79 for receiving a steel retaining pin (not shown) that passes through a loop in the end of the barrier tape, to retain it in the cavity 70.

The bottom cap 41, shown in Figs. 16 and 17, is a push fit in the lower part 70b of the cavity and includes a substantially flat plate 80 that closes the lower end of the cavity 70, without obstructing the elongate slot 56. The plate includes a bore 82 for receiving the steel retaining pin.

The body element 40 is preferably moulded in one piece from a plastics material. To this end, the walls may be very slightly tapered, for example at an angle of between 1 ° and 2°, to enable release from the mould.

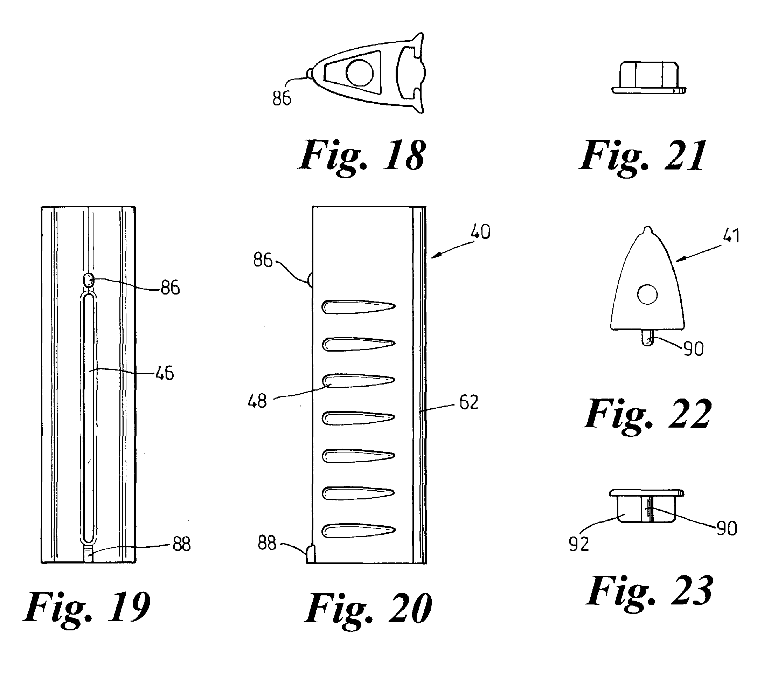

A second form of the connector device is shown in figures 18 to 23. In this embodiment of the invention, the body element 40 includes two moulded pips 86,88 on its rear edge, at either end of the slot 46. Those pips 86,88 serve as bumpers that absorb the shock when the connector hits the cassette as the tape is retracted and strengthen the moulding along that edge.

The bottom cap 41 of the second connector device includes a detent 90 that engages the fixing point to prevent unintentional release of the connector. The detent 90 comprises a moulded plastic rib that extends rearwards from the rear wall 92 of the cap. The wall 92 is resilient, allowing the detent to be pressed in slightly when the connector is attached to the fixing point. Alternatively, the cap may be provided with a locking device, such as a grub screw, a rotatable cam or a resiliently-biassed catch.

Various modifications of the connector device are possible. For example, the body element may be moulded in two or more places that are assembled together, for example by gluing or welding.

## Claims

1. A connector device for use with a personnel barrier system, the connector device including:
a first connecting structure suitable for engaging a first fixing point including a fixing member having a substantially T-shaped cross-section, said first connecting structure including a pair of opposed, inwardly-extending wall elements that, in use, engage the T-shaped fixing member, said wall elements defining between them an elongate slot having a substantially T-shaped cross-section,
and a second connecting structure suitable for engaging a second fixing point having slot with a substantially V-shaped cross-section, said second connecting structure including a pair of outwardly-extending wall elements that, in use, engage the V-shaped slot of said second fixing point.

2. A connector device according to claim 1, wherein said first connecting structure and said second connecting structure are substantially co-axial.

3. A connector device according to claim 2, said connector device including a pair of substantially parallel connector elements each of which has a substantially T-shaped cross-section, the inner portions of said connector elements comprising said inwardly-extending wall elements that, in use, engage the T-shaped fixing member of the first fixing point, and the outer portions of said connector elements comprising said outwardly-extending wall elements that, in use, engage the V-shaped slot of said second fixing point.

4. A connector device according to claim 3, wherein the rear faces of the outwardlyextending wall elements subtend an angle of between 80° and 90°, preferably approximately 90°.

5. A connector device according to claim 3 or claim 4, wherein the front faces of the T-shaped connector elements are arcuate and concave, the centres of curvature of said arcuate faces being substantially coaxial.

6. A connector device according to any one of the preceding claims, in which the front part of the T-shaped slot has a width of between 6.5mm and 8.5mm, preferably approximately 7.0mm, and the rear part of the slot has a width of between 10.5mm and 11.5mm, preferably of approximately 10.8mm.

7. A connector device according to any one of the preceding claims, in which the distance between the outer edges of the wall elements is between 16.5mm and 17.0mm, preferably approximately 16.6mm.

8. A connector device according to any one of the preceding claims, including at least one stop member within said elongate slot, for limiting axial movement of said T-shaped fixing member along said slot.

9. A connector device according to any one of the preceding claims, including a cap member that closes one end of said elongate slot.

10. A connector device according to any one of the preceding claims, including attachment means for attaching said connector device to the free end of a tape.

11. A connector device according to any one of the preceding claims, said connector device being moulded in a plastics material.
